# EUROPEAN PATENT SPECIFICATION

(11) **EP 2 696 672 B1**
(45) Date of publication and mention of the grant of the patent: **05.08.2015**
(21) Application number: 12712383.4
(22) Date of filing: 28.03.2012
(51) Int. Cl.: A01K 1/10, A01K 5/02, A01K 5/00

(54) **AUTONOMOUSLY DISPLACEABLE FEED DISPLACEMENT VEHICLE**
AUTONOM VERSCHIEBBARER FUTTERSCHIEBER
VÉHICULE DE DÉPLACEMENT D'ALIMENT À DÉPLACEMENT AUTONOME

(30) Priority: 11.04.2011 NL 1038740
(43) Date of publication of application: 19.02.2014
(73) Proprietor: Lely Patent N.V., 3147 PA Maassluis (NL)
(72) Inventor: VAN KUILENBURG, Jan, Martinus, NL-4014 MD Wadenoyen (NL); VLAAR, Iwan, Yves, NL-4735 AC Zegge (NL); VAN DEN BERG, Karel, NL-2971 VB Bleskensgraaf (NL)
(74) Representative: Jennen, Peter Leonardus Hendricus
(86) International application number: PCT/NL2012/000024
(87) International publication number: WO 2012/141577

(56) References cited:
- FR-A1- 2 862 489
- US-A1- 2006 118 054
- Moreway LTD: "THE BOBMAN RANGE", , 8 November 2011 (2011-11-08), XP002662946, Retrieved from the Internet: URL:http://moreway.ie/Bobman.html [retrieved on 2011-11-08]

## Description

The present invention relates to a vehicle according to the preamble of Claim 1, in particular a feed displacement vehicle which can move on the ground autonomously, comprising a frame which is provided with a drive mechanism, a feed displacement means which is designed to push aside feed situated on the ground, a container for a feed supplement to be dispensed, and a dispensing device for dispensing the additive from the container.

FR-2862489 discloses an autonomous vehicle for lateral displacement of feed for goats which has a deflector on the bottom side of the vehicle. Above and on the side of this deflector, a chute extends for dispensing concentrate from a container on the vehicle to the feed situated on the ground. The chute may be collapsible.

Moreover, in the December 2008 issue of the magazine *Geitenhouderij* [Goat keeping], page 29, a prototype is described of a device according to the preamble, based on the Lely Juno™ and provided with a feed trough. This prototype is said to be usable for feed, although no further details are given.

It is a drawback of these known devices that they are not able to dispense the concentrate efficiently under all circumstances.

It is an object of the present invention to improve the vehicle of the type mentioned in the preamble, in particular with a view to render efficient dispensing of feed supplement more reliable.

The invention achieves this object by means of the vehicle according to Claim 1, wherein the vehicle comprises an adjustment means which is designed such that the dispensing device can be adjusted in order to dispense the feed supplement at a desired adjustable dispensing distance.

The invention is based on the insight that in some cases there is more feed on the ground than the vehicle can push sufficiently far towards animals. Thus, in the known device, the chute, which is indeed collapsible but not adjustable, is in many cases too far removed from the animals, at least from the intended spot for dispensing feed. This occurs in particular if roughage is dispensed for a number of days, resulting in the resistance of the mound of feed becoming too great for it to be pushed aside. By now making the dispensing device, and thus the dispensing distance, adjustable, it becomes possible to dispense the feed supplement in a suitable, desired spot in this situation as well. It should be noted that, according to the present invention, it is more readily possible to dispense relatively large amounts of roughage simultaneously, because even then the feed supplements, such as additives, can still be dispensed to the animals in a convenient way. When the animals have "eaten away" a sufficiently large amount, the vehicle can push the feed further and still dispense the feed supplement at a correct distance.

In addition, a feed pusher by the trade name Lely Juno™ is also known which comprises a self-propelled frame with a surrounding feed-pushing skirt, but no feed supplement container or feed supplement-dispensing device. For further details, the reader is referred to, inter alia, WO2007120036A1 and WO2009070007A1.

The adjustment means may, for example, be adjusted manually before pushing feed in a feed alley. Depending on the amount of feed to be pushed, the dispensing distance can be modified. Thus, a different dispensing distance can be used if feed is dispensed more often, but in amounts which are smaller each time, than when feed is dispensed less often, but in greater amounts. In this way, it is also possible to adjust the vehicle to different animals, i.e. to set a short distance for (pygmy) goats, and a larger distance for cows. It is also possible to use different settings for different stages of one animal species, such as calf, yearling and heifer in the case of dairy cattle. Advantageously, the adjustment means is designed in order to, autonomously and on the basis of at least one position-dependent parameter, adjust the dispensing distance of the dispensing device. This not only has a labour-saving effect resulting from the fact that the vehicle can adjust the dispensing distance by itself, but it also enables the vehicle to react dynamically to changing local circumstances. All this will be explained in more detail below, but one thing that will be mentioned here already is that, for example, the amount of feed to be pushed may vary to a greater of lesser degree locally. As a result thereof, the desired dispensing distance may also vary to a greater or lesser extent. Due to the fact that the vehicle can automatically take this into account, feed supplement can be dispensed in an optimum manner and with as little loss as possible and, for example, in an optimum range for different animals.

In the present application, the expression "able to move on the ground autonomously" means that the vehicle is self-propelled and can find its way on the ground by itself, for example in an animal shed. In this case, the vehicle is designed to move freely in two directions. Devices which move, for example, along a rail or another fixed guide, optionally (also) resting on the ground, are thus excluded. The term "feed supplement" is intended to mean an additive or a mixture of additives for feed in general and in particular for roughage. Possible examples are various types of (concentrate) pieces, minerals, but also, for example, additives to make the roughage more attractive, such as molasses. It is also possible to include specific kinds of (general) medicines or health-improving additives.

The term "dispensing distance" is intended to mean either the dispensing distance with respect to the vehicle or with respect to an external point of reference, such as a guide means, as will be explained in more detail below. Alternatively and in general, it would also be possible to refer to a dispensing position which can be determined both with respect to the vehicle, at least the current position thereof, and with respect to an external point of reference, such as a feeding fence. It is emphasized here that the adjustability of the dispensing distance requires that it can assume at least two different values at which feed supplement is actually dispensed. This only excludes the possibility of optionally dispensing feed supplement.

The term "local" parameter is understood to mean a parameter which is determined in situ and which may therefore differ from location to location.

In embodiments of the invention, a parameter is the distance of the vehicle to a guide means, in particular to a feeding fence. The vehicle then comprises a distance-determining means which is designed to determine the distance between the vehicle and the guide means. A self-propelled vehicle will often use such a guide means in order to determine the route to be travelled, since this is indeed often functionally determined by, for example, a feeding fence. In general, the vehicle will try to keep a fixed distance to the guide means. In such a case, the dispensing distance for the additive will also be constant. However, if there is too much feed on the ground or if an obstacle is present and the vehicle cannot keep the distance as a result thereof, it is still possible to set the dispensing distance in a favourable manner. It should be noted that said dispensing distance is here advantageously measured with respect to the guide means and not with respect to the vehicle.

The distance-determining means may, for example, be an ultrasound sensor or an (optical) 3D camera, for example based on a delay sensor or a phase-shift sensor or also, for example, a GPS device. In this case, use may alternatively or additionally be made of local beacons or of guide systems which are optionally provided in the ground, such as guides or optical identification marks.

Advantageously, the adjustment means is designed to adjust the dispensing distance within a predetermined access range with respect to the guide means. This makes it possible to set a desired dispensing distance, for example depending on the animal, which is closer to the feeding fence for small animals than for large animals, for example. If desired, the dispensing distance is dependent on animal identification. As a result thereof, the vehicle itself can set the dispensing distance (e.g. with respect to the guide means) on the basis of animal identification. The fact that the dispensing distance can also be linked to the determined width of the material on the ground is also a significant advantage. In particular, the access range may be chosen as a central section of the material on the ground, also referred to as its "back". An advantage of dispensing the feed supplement on this part is that it will almost always be sufficiently flat to prevent the feed supplement from sliding off the material. After all, if for example chunks were to roll down the slanting side of a mound of feed, this would result in waste. The expression "central section" as used here is effectively meant to refer to a section which is sufficiently flat to prevent the feed supplement from rolling down. Obviously, this section may be determined in practice. However, at least 0.3 m from the vehicle is a good guideline, that is to say effectively that part of the material on the ground which is situated at least 0.3 m from the vehicle. In this case, it is assumed that feed supplement which rolls down the material on the side of the animal can indeed be reached by the animals.

The vehicle comprises a material-detecting device which is designed for detecting material on the ground, in particular feed. In this case, a parameter is the presence of detected material on the ground, preferably the area in which said material on the ground is detected. Such a material-detecting device may, for example, comprise a camera with image-processing software. The camera may, for example, be an ultrasound camera or an optical camera, such as a video camera or a 3D camera. On the basis of the detected image, it is possible, for example by comparing a detected colour with a reference colour of the feed, to determine whether there is actually feed on the ground or whether it is something else. An alternative way of detecting material on the ground is described in the abovementioned document WO2009070007A1 where a torque difference-determining device detects a difference in torque on the driven wheels. If no difference is detected or a difference which corresponds to the minimum possible difference, the control circuit infers that there is no material/feed present, whereas with a greater difference in torque it infers that material is present.

Advantageously, the material-detecting device is designed for detecting material on the ground viewed in a direction at right angles to a direction of movement of the vehicle, and more particularly between the vehicle and the guide means. Thus, the dispensing device can always be set as a function of the local circumstances. To this end, it is advantageous if the material-detecting device, such as a camera, has a sufficiently narrow image field and/or that the control circuit or image processing software uses a sufficiently small part of the image to set the dispensing device to. Consideration may be given to an image field width which is, for example, half the size of the length of the vehicle, viewed in the direction of movement of the vehicle.

The adjustment means is designed for adjusting the dispensing distance within the range in which the material on the ground has been detected. This provides additional flexibility when dispensing the feed supplement, since it is now possible to be more flexible with regard to pushing aside material/feed situated on the ground, as no fixed distance has to be kept with respect to, for example, a feeding fence. Now, the material on the ground can also be pushed together until it exerts a certain resistance on the vehicle or until it reaches a certain height, etc. The dispensing distance will also vary. With the known device, on the other hand, the fixed distance could result in problems, such as collisions with the feeding fence, etc. In particular, the adjustment means is designed to dispense on material which has been detected on the ground, more particularly only on material which is situated on the ground. After all, the situation may occur that there is no feed (anymore) along a section of the path. In that case, it is disadvantageous to dispense feed supplement, for example because it is difficult for the animals to eat flour or minerals off the ground or because the feed supplement comprises a liquid feed supplement, such as molasses. By now designing the vehicle in such a manner that the feed supplement is preferably only dispensed on material which has been detected on the ground, such waste is efficiently counteracted.

In particular, the dispensing device comprises a chute, auger or conveyor belt or a combination thereof. Such dispensing devices are simple, easy to operate and very reliable. However, alternative dispensing devices are not excluded, such as a spraying device for liquid feed supplements, such as molasses.

In embodiments, the adjustment means comprises an angle and/or length adjustment means of the chute, auger or conveyor belt. Such an adjustment means can then, for example, comprise an electric/stepping motor which is controlled thereby. By being able to adjust the length and/or angle position of the dispensing means, it is possible to adjust the dispensing distance in a simple and reliable way. In this case, calibration measurements may be carried out beforehand in order to be able to take into account not only the geometrical consequences of angle and dimensions, but also the falling behaviour of different types of feed supplement. Advantageously, the adjustment means is operatively coupled to a distance-determining device, in particular that which determines a distance of the vehicle from a guide means, such as the feeding fence. Thus, it is possible to ensure in an even more reliable manner that the feed supplement falls on detected material/feed which is situated on the ground.

Alternatively or additionally, the adjustment means comprises a dispensing rate adjustment means. This may, for example, comprise an auger or belt speed adjustment means, but also, for alternative dispensing means, for example a spraying pressure adjustment means, such as for liquid feed supplements, etc. After all, it is also possible to adjust the dispensing distance within certain boundaries by varying the dispensing speed of the feed supplement. Again, calibration measurements may be carried out beforehand. The adjusting device may then in each case refer to a table containing these calibration measurements in order to set a desired dispensing distance.

In embodiments, the dispensing device is designed to vary the dispensing distance, in particular according to a pattern, more particularly according to a regular pattern. As a result thereof, the device can spread the feed supplement over the feed situated on the ground, thus, for example, making it possible to render a larger proportion thereof more attractive. In this way, it is also possible to improve the intake of the feed supplement. To this end, the dispensing device may comprise an adjustment means which is designed to perform an oscillating movement. The oscillating movement is preferably regular, such as a sinus or triangular movement, but may, alternatively, for example also be an arbitrary movement. After all, there is always a certain range within which animals can reach and eat the feed and thus also the feed supplement which has been dispensed thereon. It should be noted that during a subsequent tour past the feed, a new dose of feed supplement will, in almost all cases, be dispensed in a different spot, so that ultimately every part of the feed has received a dose of feed supplement. Alternatively, the dispensing device may be designed to dispense the feed supplement over a substantial part, at least half, of the range within which the animals can access the feed. To this end, the device may for example comprise an adjustable spreading plate or nozzle.

The invention will be explained below with reference to the drawing, in which:
Fig. 1 shows a diagrammatic side view in cross section of an embodiment according to the invention,
Fig. 2 shows a diagrammatic top view of an embodiment according to the invention, and
Figs. 3a-c diagrammatically show some dispensing scenarios.

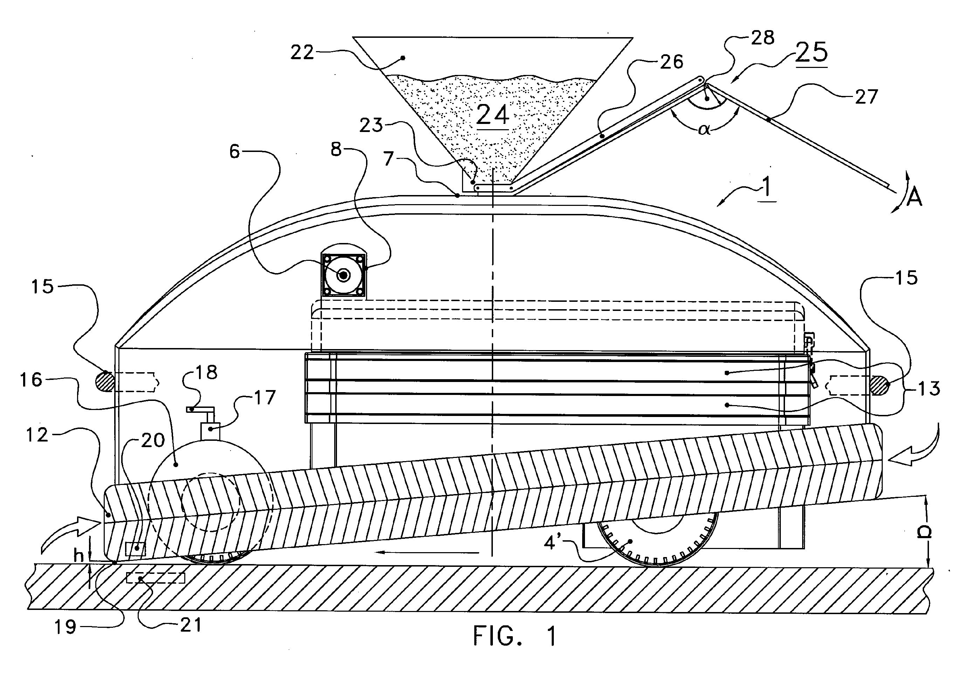

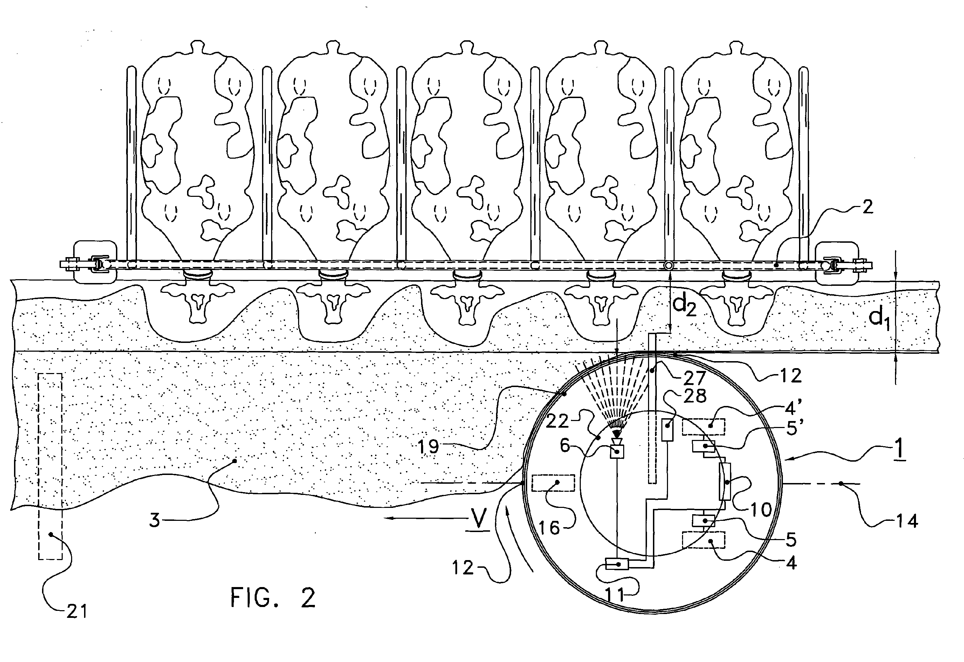

Fig. 1 shows a diagrammatic side view in cross section of an embodiment of an autonomous, unmanned vehicle 1 according to the invention. Reference numeral 2 denotes a feeding fence with feed 3 to be pushed. The vehicle 1 comprises wheels 4, 4', driven by drive mechanisms 5, 5' (see also Fig. 2), and an additional wheel 16.

The vehicle also comprises a distance sensor 6, a covering 7 with an opening 8, as well as a feed displacement means 12, charging strips 13, a safety bumper 15 and a height adjustment 18 for the wheel suspension 17. In this case, reference numeral 19 indicates a lowest point. An inductive sensor 20 detects an induction strip 21.

Furthermore, the vehicle 1 comprises a feed supplement container 22 which contains feed supplement 24 and which has a metering opening 23. Reference numeral 25 denotes a dispensing device with a conveyor belt 26, a chute 27 which is movable in the direction of arrows A, and an adjustment means 28.

Fig. 2 shows a diagrammatic top view of an embodiment according to the invention. Here, similar parts are denoted by the same reference numerals. Furthermore, it shows a torque difference-determining means 10 and a control unit 11.

Reference is expressly made here to pages 7 to 12 of WO2009070007A1 which describes many details of the embodiment illustrated here. For this reason, a number of parts will be discussed only briefly or not at all in the following.

It should also be noted that the embodiment from Fig. 1 shows a dispensing device 25 which faces backwards, but this has only been done for the sake of clarity. In use, the dispensing device 25 will of course functionally project to the side, that is to say in the direction into the paper.

Now, the feed supplement container 22 contains feed supplement 24, for example concentrate or mineral chunks. Of course, the container can have any desired shape and can, as is the case here, be placed outside the covering 7, but also inside. All this may, for example, depend on the size of the container 22. The container 22 has a metering opening 23, via which the feed supplement 24 can be dispensed to a dispensing device 25, here in the form of an escalator conveyor belt 26 which, in turn, dispenses the feed supplement 24 metered thereon to a chute 27, via which the feed supplement can eventually be dispensed.

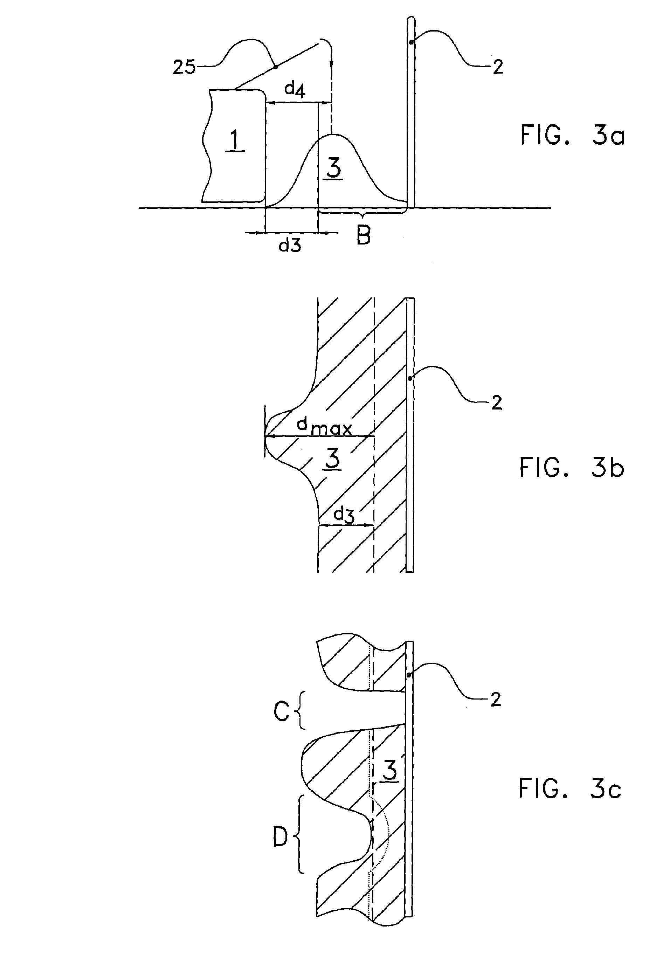

The chute 27 is adjustable by means of adjustment means 28. For example, this means sets an angle α, so that the chute 27 is moved in the direction of the arrows A. Thus, it is possible to set a different dispensing distance. See Figs. 3a-c for this. The adjustment means 28 in this case comprises, for example, a stepping motor or the like which is operatively connected to the control unit 11. Alternatively, the adjustment means 28 may also comprise an optionally telescopic extending device for the chute 27 or the overall dispensing device 25 by means of which the dispensing distance can be set very directly.

The control unit 11 is also operatively connected to the distance sensor 6 which, in the illustrated embodiment, determines a distance to the feeding fence 2. Distance sensor 6 is, for example, an ultrasound sensor or a 3D camera. On the basis of the measured distance, the control unit 11 controls the drive mechanism 4, 5 of the wheels 4', 5' in order to push the feed 3 with the vehicle, in principle as far as the distance d1, as can be seen in Fig. 2. Furthermore, control unit 11 controls the dispensing device 25, in particular the adjustment means 28, in such a manner that the dispensing distance, denoted by d2 in Fig. 2, with respect to the feeding fence 2 is maintained.

However, there may be cases where there is so much feed 3 on the ground that the vehicle 1 encounters too much resistance when pushing it laterally, and the distance d1 therefore becomes greater than the distance to be maintained. In this case, the distance d2 will generally also become greater, which is undesirable. In this case, the control unit 11 readjusts the adjustment means 28, so that at least the distance d2 does not change, obviously only to the extent that the mechanical limits of the overall vehicle allow this. It should be noted that the presence of excess feed 3 can also be determined by means of the torque difference-detecting means 10 which is operatively connected to the control unit, which will measure an excessive signal if the vehicle 1 encounters too much resistance.

It is also possible that there is, on the contrary, too little feed 3 on the ground. Fig. 2 shows an example thereof near the heads of the illustrated animals, in this case cows. They have eaten the feed 3 beyond the distance d2. With the known devices, this could result in feed supplement 24 being dispensed on the ground. By now determining whether there is feed 3 in the area where feed supplement 24 is to be dispensed using the distance sensor 6, in this case an ultrasound sensor or 3D camera, it is possible to prevent waste. After all, if the ultrasound image or 3D image shows that there is no feed 3, then no feed supplement has to be dispensed. Alternatively, the distance d2 may be changed such that the feed supplement 24 is dispensed in an area where feed 24 is indeed present. Another alternative is to change the pushing procedure in such a manner that pushing is carried out laterally until a certain resistance is encountered by the vehicle. In this way, it is also possible for the distance d1 to vary and for the dispensing distance d2, at least the dispensing device, to be adapted accordingly. It should be noted that all distances may also depend on the type of animal, since, for example, a cow is much larger than many other animals, and can perhaps reach further with its head.

Figs. 3a-c diagrammatically show three scenarios which have in part already been indicated above.

Fig. 3a shows a diagrammatic sectional view of a case in which feed supplement is dispensed at a distance d4 which is greater than d3 and is situated in an area B. In this way, it is prevented that feed supplement is dispensed in an area with a slope which is too steep, indicated in the figure by the portion which is at a maximum distance d3 to the vehicle. By contrast, the area "B" is the area which is either sufficiently flat or ensures that feed supplement can roll in the direction of the feeding fence 2. Although the distance d3 may obviously vary considerably, 25 to 30 cm may be given as a guideline, although this is obviously also dependent on the type of feed 3 and the pushing mode which has been set on the vehicle 1.

Fig. 3b shows a diagrammatic top view of a case in which too much feed 3 was situated on the ground locally to be able to push it, thus resulting in the "bump" protruding on the left. In order then not to dispense the feed supplement 24 outside the reach of the animals, which reach is diagrammatically indicated by the dashed line, the dispensing distance, which is d3 elsewhere, will be increased to a maximum of dmax at that location. The required distance information can obviously be obtained by means of the distance sensor 6 from Figs. 1 and 2.

Fig. 3c shows a section where there is less feed 3 in front of the feeding fence 2. Suddenly, there is no longer feed present in area C. It then makes no sense to dispense feed supplement 24, and the dispensing of feed, indicated along the dotted line, is then ceased. Whether or not feed 3 is present can be detected, for example, by means of the ultrasound or 3D distance sensor 6 from Fig. 1 or 2. If the latter does not give off a signal against the background of the ground itself, it can be assumed that there is no feed.

There is also less feed 3 in area D, but gradually, more particularly in such a manner that the normal dispensing distance, indicated by the dotted line and, as in Fig. 3b, corresponding to the reach of the animals, lies too close to the edge of the feed 3 which may or may not have been pushed. In order to then prevent the situation shown in Fig. 3a from occurring and no correction taking place, the dispensing distance will then be changed, at least with respect to the feeding fence 2. This is illustrated by allowing the dotted line to make a dent to the right. Thus, a sufficiently large distance will remain between the dispensing position and the edge of the feed 3, such as for example 25 to 30 cm.

The above-described variation in the dispensing distance can also be used without the local absence of feed requiring this, for example. By varying the dispensing distance, but staying within the reach of the animals, that is to say up to the dashed line, the dispensation of feed supplement can be spread, offering advantages for the intake of both feed and feed supplement. To this end, the control unit 11 can be designed to vary the dispensing distance of the dispensing device, in particular such that it is independent from a local parameter. For example, the adjustment means 28 may carry out a periodical oscillating movement, such as sinusoidal or triangular or zigzag-shaped.

## Claims

1. Autonomous feed displacement vehicle (1) moving on the ground, comprising a frame which is provided with
- a drive mechanism (5, 5') - a feed displacement means (12) which is designed to push aside feed situated on the ground
- a container (22) for a feed supplement (24) to be dispensed, and
- a dispensing device (25) for dispensing the feed supplement from the container;
**characterized in that** the vehicle comprises adjustment means (28) which is designed such that the dispensing device can be adjusted in order to dispense the feed supplement at a desired adjustable dispensing distance and wherein the vehicle comprises a material-detecting device which is designed for detecting material on the ground and wherein the adjustment means is designed for adjusting the dispensing distance within the range in which the material on the ground has been detected.

2. Vehicle according to Claim 1, wherein the adjustment means is designed in order to autonomously and on the basis of at least one position-dependent parameter adjust the dispensing distance of the dispensing device.

3. Vehicle according to Claim 2, wherein a parameter is the distance from the vehicle to a guide means, in particular to a feeding fence, and wherein the vehicle comprises a distance-determining means which is designed to determine the distance between the vehicle and the guide means.

4. Vehicle according to one of the preceding claims, wherein the adjustment means is designed to adjust the dispensing distance within a predetermined access range with respect to the guide means.

5. Vehicle according to one of the preceding claims, wherein the material-detecting device is designed for detecting feed on the ground.

6. Vehicle according to claim 5 wherein the material-detecting device is designed for detecting feed viewed in a direction at right angles to a direction of movement of the vehicle.

7. Vehicle according to the combination of claim 3 and claim 6 wherein the material-detecting device is designed for detecting feed between the vehicle and the guide means, and wherein a parameter is the presence of detected material on the ground, preferably the area in which said material on the ground is detected.

8. Vehicle according to one of the preceding claims, wherein the dispensing device comprises a chute, auger or conveyor belt or a combination thereof.

9. Vehicle according to one of the preceding claims, wherein the adjustment means comprises an angle adjustment and/or length adjustment means of the chute, auger or conveyor belt.

10. Vehicle according to one of the preceding claims, wherein the adjustment means comprises a dispensing rate adjustment means.

11. Vehicle according to one of Claims 2-10, wherein the dispensing device is designed to vary the dispensing distance, in particular according to a pattern, more particularly according to a regular pattern.

## Patentansprüche

1. Autonomes Futter-Verschiebefahrzeug (1), das sich auf dem Boden bewegt, wobei es einen Rahmen umfasst, der mit Folgendem versehen ist:
- einem Antriebsmechanismus (5, 5')
- einem Futter-Verschiebemittel (12), das dafür ausgelegt ist, auf dem Boden befindliches Futter beiseitezuschieben
- einen Behälter (22) für einen zu verabreichenden Futterzusatz (24) und
- eine Verabreichungseinrichtung (25) zum Verabreichen des Futterzusatzes aus dem Behälter,
**dadurch gekennzeichnet, dass** das Fahrzeug Einstellungsmittel (28) umfasst, die derart ausgelegt sind, dass die Verabreichungseinrichtung eingestellt werden kann, um den Futterzusatz in einem gewünschten einstellbaren Verabreichungsabstand zu verabreichen, und wobei das Fahrzeug eine Materialerkennungseinrichtung umfasst, die dafür ausgelegt ist, Material auf dem Boden zu erkennen, und wobei die Einstellungsmittel dafür ausgelegt sind, den Verabreichungsabstand innerhalb des Bereichs, in dem das Material auf dem Boden erkannt worden ist, einzustellen.

2. Fahrzeug nach Anspruch 1, wobei die Einstellungsmittel dafür ausgelegt sind, autonom und auf der Grundlage wenigstens eines positionsabhängigen Parameters den Verabreichungsabstand der Verabreichungseinrichtung einzustellen.

3. Fahrzeug nach Anspruch 2, wobei ein Parameter der Abstand von dem Fahrzeug zu einem Führungsmittel, insbesondere zu einem Fütterungszaun, ist und wobei das Fahrzeug ein Abstandsbestimmungsmittel umfasst, das dafür ausgelegt ist, den Abstand zwischen dem Fahrzeug und dem Führungsmittel zu bestimmen.

4. Fahrzeug nach einem der vorhergehenden Ansprüche, wobei die Einstellungsmittel dafür ausgelegt sind, den Verabreichungsabstand innerhalb eines vorbestimmten Zugriffsbereichs in Bezug auf das Führungsmittel einzustellen.

5. Fahrzeug nach einem der vorhergehenden Ansprüche, wobei die Materialerkennungseinrichtung dafür ausgelegt ist, Futter auf dem Boden zu erkennen.

6. Fahrzeug nach Anspruch 5, wobei die Materialerkennungseinrichtung dafür ausgelegt ist, Futter, gesehen in einer Richtung im rechten Winkel zu einer Bewegungsrichtung des Fahrzeugs, zu erkennen.

7. Fahrzeug nach der Kombination von Anspruch 3 und Anspruch 6, wobei die Materialerkennungseinrichtung dafür ausgelegt ist, Futter zwischen dem Fahrzeug und dem Führungsmittel zu erkennen, und wobei ein Parameter das Vorhandensein von erkanntem Material auf dem Boden, vorzugsweise die Fläche, in der das Material auf dem Boden erkannt wird, ist.

8. Fahrzeug nach einem der vorhergehenden Ansprüche, wobei die Verabreichungseinrichtung eine Rutsche, eine Förderschnecke oder ein Förderband oder eine Kombination davon umfasst.

9. Fahrzeug nach einem der vorhergehenden Ansprüche, wobei die Einstellungsmittel ein Winkeleinstellungs- und/oder ein Längeneinstellungsmittel der Rutsche, der Förderschnecke oder des Förderbandes umfassen.

10. Fahrzeug nach einem der vorhergehenden Ansprüche, wobei die Einstellungsmittel ein Verabreichungsraten-Einstellungsmittel umfassen.

11. Fahrzeug nach einem der Ansprüche 2 bis 10, wobei die Verabreichungseinrichtung dafür ausgelegt ist, den Verabreichungsabstand, besonders entsprechend einem Muster, insbesondere entsprechend einem regelmäßigen Muster, zu verändern.

## Revendications

1. Véhicule de déplacement autonome d'aliment (1) se déplaçant sur le sol, comprenant un cadre comprenant:
- un mécanisme d'entraînement (5, 5'),
- des moyens de déplacement d'aliment (12) conçus pour pousser sur le côté un aliment situé sur le sol;
- un récipient (22) pour un supplément alimentaire (24) à distribuer, et
- un dispositif de distribution (25) pour distribuer le supplément alimentaire à partir du récipient,
**caractérisé en ce que** le véhicule comprend des moyens de réglage (28) qui sont conçus de telle sorte que le dispositif de distribution puisse être réglé dans le but de distribuer le supplément alimentaire à une distance de distribution réglable souhaitée, et dans lequel le véhicule comprend un dispositif de détection de matière qui est conçu pour détecter une matière sur le sol, et dans lequel les moyens de réglage sont conçus pour régler la distance de distribution à l'intérieur de la gamme dans laquelle la matière sur le sol a été détectée.

2. Véhicule selon la revendication 1, dans lequel les moyens de réglage sont conçus dans le but de régler la distance de distribution du dispositif de distribution de façon autonome et sur la base d'au moins un paramètre dépendant de la position.

3. Véhicule selon la revendication 2, dans lequel un paramètre est la distance entre le véhicule et les moyens de guidage, en particulier une barrière d'alimentation, et dans lequel le véhicule comprend des moyens de détermination de la distance qui sont conçus pour déterminer la distance entre le véhicule et les moyens de guidage.

4. Véhicule selon l'une quelconque des revendications précédentes, dans lequel les moyens de réglage sont conçus pour régler la distance de distribution à l'intérieur d'une plage d'accès prédéterminée par rapport aux moyens de guidage.

5. Véhicule selon l'une quelconque des revendications précédentes, dans lequel le dispositif de détection de matière est conçu pour détecter un aliment sur le sol.

6. Véhicule selon la revendication 5, dans lequel le dispositif de détection de matière est conçu pour détecter un aliment en regardant dans une direction perpendiculaire à une direction de déplacement du véhicule.

7. Véhicule selon la combinaison de la revendication 3 et de la revendication 6, dans lequel le dispositif de détection de matière est conçu pour détecter un aliment entre le véhicule et les moyens de guidage, et dans lequel un paramètre est la présence d'une matière détectée sur le sol, de préférence la région dans laquelle ladite matière sur le sol est détectée.

8. Véhicule selon l'une quelconque des revendications précédentes, dans lequel le dispositif de distribution comprend une goulotte, une vis sans fin ou une bande transporteuse, ou une combinaison de celles-ci.

9. Véhicule selon l'une quelconque des revendications précédentes, dans lequel les moyens de réglage comprennent des moyens de réglage d'angle et/ou de réglage de longueur de la goulotte, de la vis sans fin ou de la bande transporteuse.

10. Véhicule selon l'une quelconque des revendications précédentes, dans lequel les moyens de réglage comprennent des moyens de réglage de vitesse de distribution.

11. Véhicule selon l'une quelconque des revendications 2 à 10, dans lequel le dispositif de distribution est conçu pour faire varier la distance de distribution, en particulier selon un motif, plus particulièrement selon un motif régulier.
